# EUROPEAN PATENT APPLICATION

(11) **EP 1 908 379 A1**
(43) Date of publication of application: **09.04.2008**
(21) Application number: 06405416.6
(22) Date of filing: 02.10.2006
(51) Int. Cl.: A47J 31/10

(54) **Coffee Maker**

(71) Applicant: PI-DESIGN AG, 6234 Triengen (CH)
(72) Inventor: Bodum, Jörgen, 6005 St. Niklausen (CH)
(74) Representative: Liebetanz, Michael

(57) **Abstract**

A coffee maker comprises a water tank (16) with a pressure-tight closable cover (22) and a heating element located at the bottom (24) of the water tank (16), a brewing vessel (18) with a lid (48) and an aperture (52) arranged below the water tank (16), an inverted U-shaped siphon tube (26) located in the water tank (16) for discharging hot water into the brewing vessel (18), wherein the inlet end (28) of said siphon tube (26) is arranged at a distance (c) to the bottom (24) of the water tank (16) and the discharge end (30) is connected to a discharge opening (32) in the bottom (24) of the water tank (16), the discharge opening (32) being connectable to the aperture (52) in the lid (48) of the brewing vessel (18). A discharge tube (56) extending into the brewing vessel (18) and directed towards the bottom of the brewing vessel (18) is connected to the aperture (52) in the lid (48) of the brewing vessel (18).

## Description

### Field of the invention

The present invention relates to a coffee maker comprising a water tank with a pressure-tight closable cover and a heating element located at the bottom of the water tank, a brewing vessel with a lid and an aperture arranged below the water tank, an inverted U-shaped siphon tube located in the water tank for discharging hot water into the brewing vessel, wherein the inlet end of said siphon tube is arranged at a distance to the bottom of the water tank and the discharge end is connected to a discharge opening in the bottom of the water tank, the discharge opening being connectable to the aperture in the lid of the brewing vessel.

### Background of the invention

Many different ways are known to prepare coffee, and each consumer has his or her own preferences among the many different kinds of preparation methods available. The most well-known type of coffee is "standard" filter coffee, where coffee grounds are put into a filter, often in the form of a filter paper, and brewed with hot water, either manually or with a coffee-making apparatus usually called a drip coffee maker. In a drip coffee maker, water from a freshwater tank is slowly passed through a tube to which a heater element is affixed so as to heat the water in the tube. The hot water is then passed to the filter. The brewing process in a drip coffee maker is a gradual process, where the water is passed into the filter over a period of time of normally several minutes. The water passes through the coffee grounds in the filter and thereby extracts the coffee, and the extracted coffee leaves the filter through an exit opening in the bottom of the filter once it has passed through the coffee grounds.

Standard filter coffee has a tendency to either be too weak or to become bitter if made stronger. In order to improve the flavor of filter coffee, it has been suggested to stir the coffee grounds while the coffee is being brewed. An apparatus for this is disclosed, e.g., in EP 1 402 803 A1. However, for the stirring, an electric motor is needed, which will increase the cost of the coffee maker significantly.

Another type of coffee maker is the "French Press" or plunger-type coffee maker. A French press consists of a narrow cylindrical glass jug, equipped with a lid and a plunger which fits tightly in the cylinder and which has a fine wire or plastics mesh acting as a filter. Coffee is brewed by placing the coffee grounds into the jug and pouring hot water onto the grounds. The mixture is left to stand for a few minutes. Then the plunger is pressed down, thereby moving the coffee grounds to the bottom of the jug and separating the coffee grounds from the extracted coffee. In some countries, this apparatus is known simply as a coffee plunger.

Because the coffee grounds are in direct contact with the brewing water for some time, coffee brewed with the French press captures more of the coffee's flavor and oils, which often become trapped in a traditional drip coffee maker's paper filters. The coffee is usually stronger and thicker and has more sediment than drip-brewed coffee.

Unfortunately, operation of a French press coffee maker cannot easily be automated. However, many consumers prefer to prepare their coffee "by the push of a button", without having to take different actions at different times, like first having to brew the coffee and then, several minutes later, having to push down the plunger.

A beverage maker of the type mentioned at the beginning is disclosed in DE-A-33 12 354. Even though this beverage maker is reported to be suitable for brewing both tea and coffee, it is primarily intended to be used for making tea. Because of the dissatisfying taste and appearance of the coffee made this way, such beverage maker has not been accepted to date as a coffee maker.

### Summary of the invention

It is an object of the present invention to provide a coffee maker of the type mentioned at the beginning with which taste and appearance of the brewed coffee can be improved.

This object is achieved according to the invention in that a discharge tube extending into the brewing vessel and directed towards the bottom of the brewing vessel is connected to the aperture in the lid of the brewing vessel.

With the discharge tube a mixture of hot water and water vapor is transported to the bottom of the brewing chamber where the coffee grounds are provided. The hot water/vapor mixture first leads to an intensive wetting of the coffee grounds. After a few seconds, the hot water in the brewing vessel has risen to such a level that the discharge tube now dip into the water and the hot water/vapor mixture escapes from the discharge tube into the water in the form of bubbles that lead to a stirring of the coffee /water mixture.

An essential feature of the discharge tube compared to other known mixing devices is its easy cleaning.

The ideal height of an opening at the free end of the discharge tube is slightly above the maximum fill level for coffee powder in the brewing vessel. Therefore, the opening at the free end of the discharge tube is generally located at a vertical distance of 5 to 10 mm to the indicated maximum fill level for coffee powder in the brewing vessel.

Preferably the discharge tube is a distributor tube subdivided into at least two, particularly three to five tube sections arranged symmetrically to a vertical axis of the brewing vessel.

A preferred angle between the vertical axis and an axis of each tube section is an acute angle, in particular an angle of 30° to 60°.

The circumference of the openings at the free ends of the tube sections are preferably located in a horizontal plane, i.e., in a plane parallel perpendicular to the vertical axis of the brewing vessel.

It has been found that the best coffee is obtained if the time period of "bubbling" in the brewing vessel is prolonged to an extent of up to 60 seconds or even more. The "bubbling time" can be controlled by varying the distance of the inlet end of the siphon tube to the bottom of the water tank. Preferably the inlet end of the siphon tube is arranged at such a distance to the bottom of the water tank that the time necessary for the hot water to spill from the water tank into the brewing vessel is between 30 and 60 seconds. The inlet end of the siphon tube is preferably arranged at a distance of at least 5mm, particularly at least 7 mm to the bottom of the water tank.

In a preferred embodiment of the coffee maker a collecting vessel or jug is arranged below the brewing vessel and a valve-operated opening is located in the bottom of the brewing vessel for draining coffee extract into the jug.

### Brief description of the drawings

Further advantages, features and details of the invention are revealed in the following description of preferred exemplified embodiments and with the aid of the drawing which shows schematically in
- Fig. 1: a perspective view of a coffee maker;
- Fig. 2: a partially cut perspective view of a water tank and a brewing vessel;

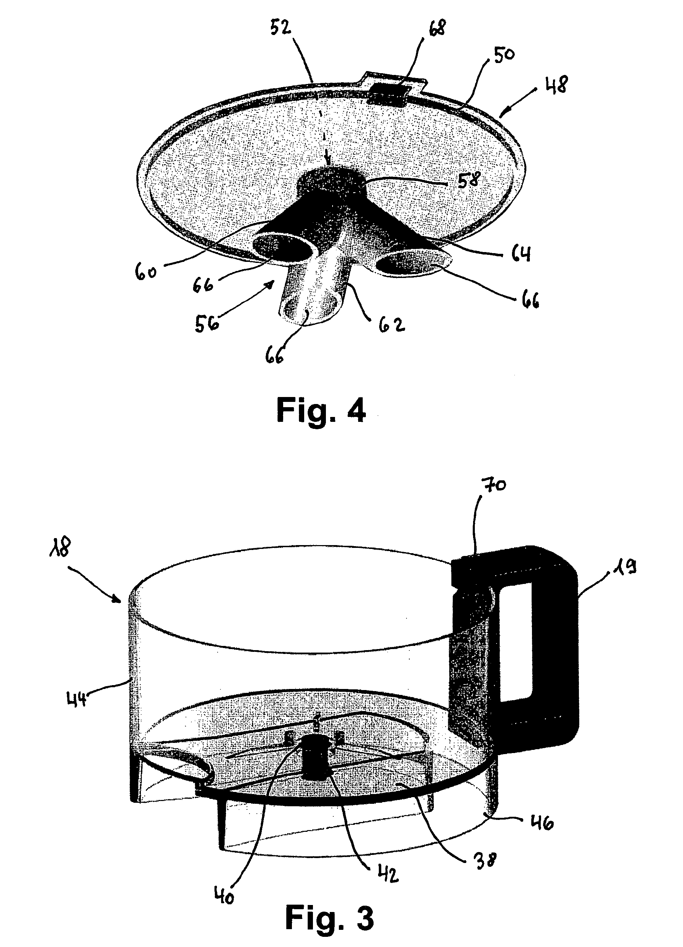

- Fig. 3: a perspective view of a brewing vessel;
- Fig. 4: a perspective view of a distributor tube connected to a lid used with the brewing vessel of Fig. 3.

### Detailed description of the invention

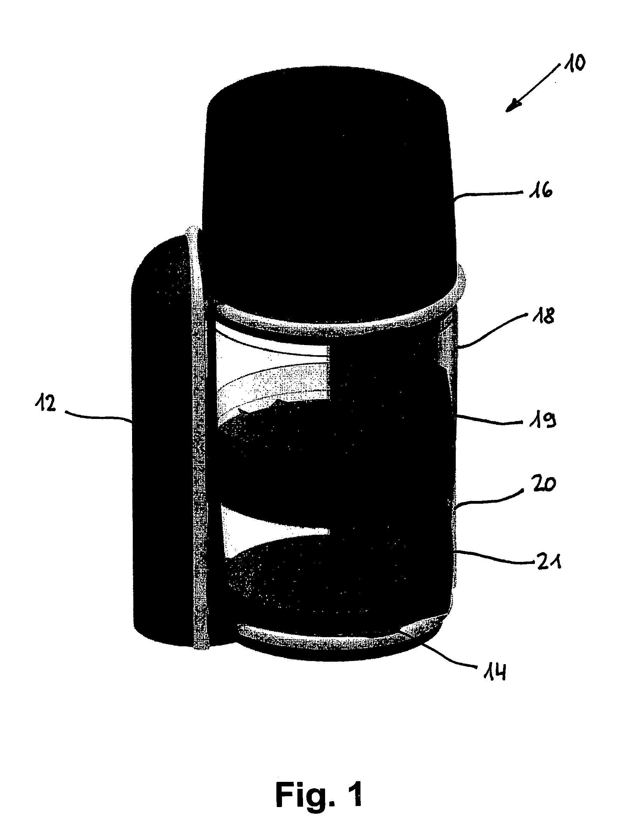

A coffee maker 10 shown in Fig. 1 includes a stand 12 with a bottom heating plate 14 and a water tank 16 at the top. A brewing vessel 18 with a handle 19 is arranged below the water tank 16. A jug 20 with a handle 21 is standing on the bottom heating plate 14 and is arranged below the brewing vessel 18.

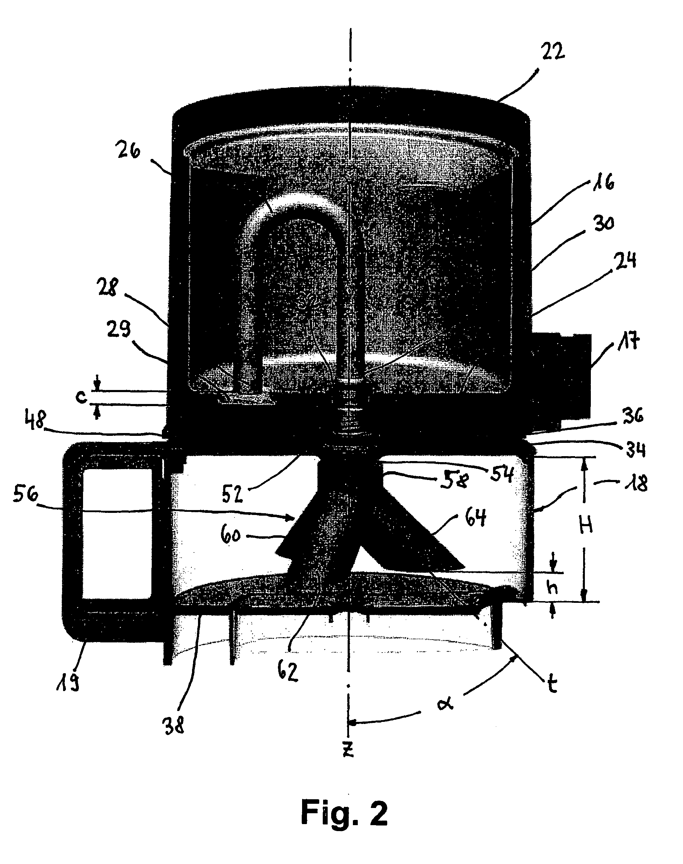

As shown in Fig. 2, the water tank 16, which in use is fixed to the stand 12 by means of a connecting part 17, is equipped with a pressure-tight closable cover 22. A heating element (not shown) is located at the bottom 24 of the water tank 16. An inverted U-shaped siphon tube 26 located in the water tank 16 has an inlet end 28 of said siphon tube 26 arranged at a vertical distance of e.g. 7 mm to the bottom surface of a recess 29 in the bottom 24 of the water tank 16. A discharge end 30 of the siphon tube 26 is connected to a discharge opening 32 located in the center of the bottom 24 of the water tank 16. The discharge opening 32 is connectable to a central aperture 52 in the lid 48 of the brewing vessel 18 in a pressure-tight manner. A sealing washer 34 slidably in the direction of a vertical axis z of the brewing vessel 18 is mounted beneath the bottom 34 of the water tank 16 at the central discharge opening 32 and is pressed against the lid 48 of the brewing vessel 18 at the central aperture 52 with the aid of a spiral pressure spring 36.

The brewing vessel 18 has a flat or slightly funnel-like bottom 38. An aperture 40 with a mechanically operated valve 42 is arranged in the center of the bottom 38 of the brewing vessel 18. A filter mesh (not shown) as normally used on the plunger of a French press coffee maker is placed over the aperture 40. To the sides, the brewing vessel 18 is limited by a circumferential sidewall 44. A flange 46 acting as a distance element extends downwards from the bottom 38, forming a secure stand while protecting the valve 42 from damage.

A lid 48 with a radial flange 50 is placed on the upper rim of brewing vessel 18. The lid 48 completely covers the brewing vessel 18. The lid 48 has a central aperture 52, from which a short central tube section 54 extends downwards in the direction of vertical axis z. A distributor tube 56 has a short main tube section 58 that fits with one end on central tube section 54 of the lid 48. The other end of the main tube section 58 is subdivided into three tube sections 60, 62, 64 arranged symmetrically to the vertical axis z of the central tube section 54 and the main tube section 58, respectively. The angle between the vertical axis z and an axis t of each tube section is e.g. 45°. The openings 66 at the free ends of each of the three tube sections 60, 62, 64 are located in a plane parallel to the bottom of the brewing vessel 18 at a vertical distance h of e.g. 5 to 20 mm.

The lid 48 of the brewing vessel 18 with the distributor tube 56 is secured to the handle 19 of the brewing vessel 18 by an aperture 68 located at the peripheral rim of the lid 48 engageable with a protrusion on the handle 19 in a click-on fashion.

While a distributor tube 56 subdivided into three tube sections 60, 62, 64 provides a preferred means of introducing the hot water/vapor mixture into the brewing vessel 18, the distributor tube 56 may be subdivided into two ore more than three tube sections. Even a single vertical tube may give satisfactory mixing of the water with the coffee grounds.

In the following, the function of the coffee maker is explained in detail.

Fresh water is filled into the water tank 16 and coffee grounds are filled into the brewing vessel 18. The water tank 16 is closed with cover 22 in a pressure-tight manner. The water within the tank 16 is heated in known manner by the heating element arranged at the bottom 22 of the water tank 16. The vapor pressure in the water container rises and presses the hot water up into the inlet end 28 of the inverted U-shaped siphon tube 26 and further to the discharge end 30 from where the hot water/vapor mixture is spilled through the central discharge opening 32 in the bottom of the water tank 16 and the central aperture 52 in the lid 48 and through the distributor tube 56 into the brewing vessel 18 within a time period of e.g. 30 to 60 seconds. This time period may be varied by variation of the vertical distance c of the inlet end 28 of the siphon tube 26 to the bottom of the recess 29 in the bottom 24 of the water tank 16. In the absence of a recess, the vertical distance c is measured between the inlet end 28 of the siphon tube 26 and the surface of the bottom 24 of the water tank 16.

The hot water remains in the brewing vessel 18 for a few minutes. During this time, coffee is extracted from the coffee grounds. After a predetermined time, an automatic timer opens the valve 42, and the finished coffee leaves the brewing vessel 18 to enter the jug 20.

Many other variations are possible, and it is to be understood that the foregoing description is provided only for illustrative purposes and is not intended to limit the scope of the invention.

### List of reference signs

- 10: coffee maker
- 12: stand
- 14: heating plate
- 16: water tank
- 17: connecting part
- 18: brewing vessel
- 19: handle of 18
- 20: jug
- 21: handle of 20
- 22: cover of 16
- 24: bottom of 16
- 26: U-shaped siphon tube
- 28: inlet end of 26
- 29: recess in 24
- 30: discharge end of 26
- 32: discharge opening in 24
- 34: sealing washer
- 36: spiral pressure spring
- 38: bottom of 18
- 40: opening in 38
- 42: valve
- 44: side wall of 18
- 46: flange on 38
- 48: lid of 18
- 50: radial flange
- 52: central aperture in 48
- 54: central tube section
- 56: distributor tube
- 58: main tube section on 56
- 60, 62, 64: tube sections
- 66: openings of 60, 62, 64
- 68: aperture
- 70: protrusion on 19

- c: distance 28-30
- z: vertical axis
- t: axis of tube sections
- α: angle between z and t
- h: distance 66-38
- H: height of 18

## Claims

1. A coffee maker comprising a water tank (16) with a pressure-tight closable cover (22) and a heating element located at the bottom (24) of the water tank (16), a brewing vessel (18) with a lid (48) and an aperture (52) arranged below the water tank (16), an inverted U-shaped siphon tube (26) located in the water tank (16) for discharging hot water into the brewing vessel (18), wherein the inlet end (28) of said siphon tube (26) is arranged at a distance (c) to the bottom (24) of the water tank (16) and the discharge end (30) is connected to a discharge opening (32) in the bottom (24) of the water tank (16), the discharge opening (32) being connectable to the aperture (52) in the lid (48) of the brewing vessel (18),
**characterized in that**
a discharge tube (56) extending into the brewing vessel (18) and directed towards the bottom of the brewing vessel (18) is connected to the aperture (52) in the lid (48) of the brewing vessel (18).

2. The coffee maker according to claim 1, wherein an opening (66) at the free end of the discharge tube (56) is located at a vertical distance of 5 to 10 mm to an indicated maximum fill level for coffee powder in the brewing vessel (18).

3. The coffee maker according to claim 1 or 2, wherein the discharge tube is a distributor tube (56) subdivided into at least two, particularly three to five tube sections (60, 62, 64), arranged symmetrically to a vertical axis (z) of the brewing vessel (18).

4. The coffee maker according to claim 3, wherein the angle (α) between the vertical axis (z) and an axis (t) of each tube section (60, 62, 64) is an acute angle, particularly an angle of 30° to 60°.

5. The coffee maker according to claim 3 or 4, wherein the circumference of the openings (66) at the free ends of the tube sections (60, 62, 64) are located in a plane perpendicular to the vertical axis (z) of the brewing vessel (18).

6. The coffee maker according to one of the claims 1 to 5, wherein the inlet end (28) of the siphon tube (26) is arranged at such a distance (c) to the bottom (24) of the water tank (16) that the time necessary for the hot water to spill from the water tank (16) into the brewing vessel (18) is between 30 and 60 seconds.

7. The coffee maker according to one of the claims 1 to 6, wherein the inlet end (28) of the siphon tube (26) is arranged at a distance (c) of at least 5mm, particularly at least 7 mm to the bottom (24) of the water tank (16).

8. The coffee maker according to one of the claims 1 to 7, wherein the discharge opening (32) in the bottom (24) of the water tank (16) is connectable to the aperture (52) in the lid (48) of the brewing vessel (18) in a pressure-tight manner.

9. The coffee maker according to claim 8, wherein a sealing element (34) is slidably mounted beneath the bottom (34) of the water tank (16) at the central discharge opening (32) and is pressed with the aid of a spring (36) against the lid (48) of the brewing vessel (18) at the central aperture (52).

10. The coffee maker according to one of the claims 1 to 9, wherein a collecting vessel (20) is arranged below the brewing vessel (18) and a valve-operated opening (40) is located in the bottom (38) of the brewing vessel (18) for draining coffee extract into the collecting vessel (20).
